# EUROPEAN PATENT APPLICATION

(11) **EP 4 787 822 A1**
(43) Date of publication of application: **05.08.2026**
(21) Application number: 25154741.0
(22) Date of filing: 29.01.2025
(51) Int. Cl.: H04L 67/51, H04L 41/5054, H04L 41/50, H04W 4/50, H04W 4/70, H04W 48/18

(54) **NETWORK INFORMATION FUNCTION, NRF-MEDIATED DISCOVERY FOR ENERGY-RELATED SELECTION OF AN APPLICATION ENABLER ENTITY IN A SERVICE ENABLER APPLICATION LAYER FOR VERTICALS, SEAL**

(71) Applicant: Deutsche Telekom AG, 53113 Bonn (DE)
(72) Inventor: ALEKSIEV, Vasil, 1030 Wien (AT)
(74) Representative: Schwöbel, Thilo K.

(57) **Abstract**

The invention relates to a method for using an application enabler layer and/or a service enabler architecture layer for verticals, SEAL, for providing communication services to a user equipment in a dynamic and/or flexible manner, using an application enablement layer and/or a vertical application layer of or via a telecommunications network, especially for supporting and providing an energy-related selection of an application enabler entity or a network entity of or associated to the telecommunications network or of or associated to a third party,
wherein the telecommunications network comprises, or is associated with, a network repository function for providing profile information of or regarding a plurality of application enabler entities or of or regarding a plurality of network entities, in a discovery process of such application enabler entities or network entities,
wherein, in order for providing communication services in a dynamic and/or flexible manner, the method comprises the following steps:
-- in a first step, a requesting application enabler entity or a requesting network entity transmits a discovery request information to the network repository function of the telecommunications network,
-- in a second step, the network repository function provides, to the requesting application enabler entity or requesting network entity, a profile information of or regarding at least one application enabler entity or of or regarding at least one network entity (502).

## Description

### BACKGROUND

The present invention relates a method for using an application enabler layer and/or a service enabler architecture layer for verticals, SEAL, for providing communication services to a user equipment in a dynamic and/or flexible manner, using an application enablement layer and/or a vertical application layer of or via a telecommunications network.

Additionally, the present invention relates to a user equipment for being used with an application enabler layer and/or a service enabler architecture layer for verticals, SEAL, for being provided with communication services in a dynamic and/or flexible manner, using an application enablement layer and/or a vertical application layer of or via a telecommunications network.

Furthermore, the present invention relates to a system or to a telecommunications networks for using an application enabler layer and/or a service enabler architecture layer for verticals, SEAL, for providing communication services to a user equipment in a dynamic and/or flexible manner, using an application enablement layer and/or a vertical application layer of or via a telecommunications network.

Additionally, the present invention relates to an energy information function for being used in an inventive system or telecommunications network.

Furthermore, the present invention relates to a program and to a computer-readable medium for using an application enabler layer and/or a service enabler architecture layer for verticals, SEAL, according to the inventive method.

In conventionally known telecommunications networks, it is known to configure a telecommunications network in a manner such - and also to use a user equipment with a telecommunications network in a manner such - that an application enabler layer and/or a service enabler architecture layer for verticals, SEAL, is used.

In SEAL, or in general in the application enabler layer of 3GPP, the entities offering specific services are rather static (and, especially, are rather statically configured), resulting in different servers (that are offering a specific functionality, respectively) being contacted based on static configurations. For example, when the UAE (UAS application enabler, i.e. uncrewed aerial system application enabler) server needs to offer a specific functionality, it should contact the LMS (Location Management Server) responsible for a specific network slice and this is conventionally possible only via fixed address configuration. Furthermore, in order to have access to a specific service (such as for establishing communication between different application servers), there often needs to be a specific contract - in quite a similar manner as when, in current networks, IP connectivity is only established when customers conclude a contract and a user is only then allowed to access a "walled garden", or use bandwidth and data amount (provisioned and granted to the respective user by using its network representation e.g. user credentials, Line ID, SIM-number, etc.).

In conventionally known 3GPP 5G core networks, it is known to use the network repository function, NRF, - regarding (or: among) different network functions or services of the core network - for
-- service discovery and finding end point addresses,
-- maintaining the network function profile, NF profile, of available network function instances and their supported services,
-- notification about newly registered/updated/deregistered network function instances along with its potential network function services to the subscribed network function service consumer.
In a typical 3GPP 5G core network, the network repository function is part of a service-based architecture.

While the use of a network repository function (entity) is known in principle (especially within 5GS networks, or even between different 5GS networks), such discovery is presently not possible regarding the enabler services (or, the respective vertical application enablers entities, or SEAL servers) - i.e. which enabler services are able to be used or are able to interwork with the considered 5G system - is rather static (or statically configured), and communication is fixed in (and, thus, required to be performed using) a dedicated addressing configuration. Typically, it is not possible for the SEAL servers to discover each other (i.e. other SEAL servers) or to discover NFs (i.e. of 5GS core network of the considered operator) via service-based architecture principles in the PLMN operator domain, typically due to the SEAL servers on the one hand, and the NFs of the core network on the other hand belonging to different security domains, and also due to the fact that there is no discovery procedures established among SEAL servers. Especially, and specifically in a situation where a discovery or a selection of a SEAL server is not possible at all, it is presently not possible to select a SEAL server based on other parameters such as, e.g., the energy efficiency.

### SUMMARY

An object of the present invention is to provide a technically simple, effective and cost-effective solution for using an application enabler layer and/or a service enabler architecture layer for verticals, SEAL, for providing communication services to a user equipment in a dynamic and/or flexible manner, using an application enablement layer and/or a vertical application layer of or via a telecommunications network, especially for supporting and providing an energy-related selection of an vertical application enabler entities, or SEAL servers or a network entity of or associated to the telecommunications network or of or associated to a third party. A further object of the present invention is to provide a corresponding user equipment, a corresponding system or telecommunications network, a corresponding energy information function entity, and a corresponding program and computer-readable medium.

The object of the present invention is achieved by a method for using an application enabler layer and/or a service enabler architecture layer for verticals, SEAL, for providing communication services to a user equipment in a dynamic and/or flexible manner, using an application enablement layer and/or a vertical application layer of or via a telecommunications network, especially for supporting and providing an energy-related selection of an application enabler entity or a network entity of or associated to the telecommunications network or of or associated to a third party, wherein the telecommunications network comprises, or is associated with, a network repository function entity (NRF) for providing profile information of or regarding a plurality of application enabler entities or of or regarding a plurality of network entities, in a discovery process of such application enabler entities or network entities, wherein, in order for providing communication services in a dynamic and/or flexible manner, the method comprises the following steps:
-- in a first step, a requesting application enabler entity or a requesting network entity transmits a discovery request information to the network repository function entity of the telecommunications network,
-- in a second step, the network repository function entity (NRF) provides, to the requesting application enabler entity or requesting network entity, a profile information of or regarding at least one application enabler entity or of or regarding at least one network entity.

According to the present invention, it is advantageously possible that a network repository function entity is not only possible to be used within a network, especially a 5GS network, and/or between a network and a further network, but also in a manner such that, in a discovery process, profile information of or regarding
-- a plurality of application enabler entities (or regarding at least one thereof) and/or
-- a plurality of network entities (or regarding at least one thereof) is able to be provided (dynamically and/or flexibly) in the context of an application enabler layer and/or a service enabler architecture layer for verticals, SEAL (in order, especially, to provide communication services to a user equipment in a dynamic and/or flexible manner) - and especially without the restrictions of enabler services (or application enabler entities, thereof) being configured rather statically and in a manner such that communication is fixed in a dedicated addressing configuration. According to the present invention, this advantageously makes it possible for the SEAL servers (or application enabler entities) to discover each other (i.e. one SEAL server discovers another SEAL server) or to discover network functions or services, NFs, (i.e. a SEAL server discovers an NF) especially via, or using, service-based architecture principles in the PLMN operator domain. Especially according to the present invention, it is advantageously possible - not only that SEAL servers (are able to) discover each other or network functions or services, NFs, (at all) but also - that the choice of such SEAL servers (or, application enabler entities or requesting network entities) is able to be dynamically and flexibly conducted (and/or an initial choice to be dynamically and flexibly revised) based on specific other parameters such as, e.g., the energy efficiency (or other energy-related pieces of information). Especially, this is in contrast to how a choice between different SEAL servers is made in conventionally known telecommunications networks, especially 5GS networks, where, typically, only hardcoded configurations instead of asking a network repository function are presently available, e.g., in case that
-- an uncrewed aerial system application enabler server (UAE server) tries to find the right location management server (LMS server) for a dedicated network slice (which is, conventionally, rather realized using a static configuration and, especially, does not involve energy efficiency criteria); or
-- a SEAL server needs a network function or service, NF, (e.g. location management function, LMF, network data analytics function, NWDAF, and/or an access and mobility management function, AMF): Although SEAL servers are deployed in the PLMN domain, it is, in conventionally known telecommunications networks, especially 5GS networks, typically a fixed configuration for a SEAL server to find the needed network function or service, NF, and communicate with it for the needs of providing the respective service; or
-- the location management server, LMS, from the service enabler architecture layer for verticals, SEAL, can find the operator LMF (i.e. the location management function of the operator, or its telecommunications network) typically only via a fixed configuration, and this fixed configuration typically does not take into consideration other (decision) parameters, such as energy efficiency criteria.

In contrast thereto, according to the present invention, it is advantageously possible to provide for a flexible discovery process such that not only the process is inherently more flexible and dynamic (e.g. in view of potential service failures or the like in which situations it might be desirable to be able to flexibly us an alternative network function or service or instance instead of the failed one) but also such that it is possible to take into consideration - in the decision which network function or service to use - at least one further (decision) parameter, e.g. the energy efficiency; thus it is advantageously possible to optimize an outcome related to the decision parameter such as enhance the energy efficiency and/or the use of green energy which is getting more and more important as energy prices are raising, and carbon emissions reduction is a target almost everywhere.
Especially according to the present invention, it is advantageously possible to apply such a solution in 5G advanced architecture and for subsequent 3GPP architectures such as, especially, 6G architecture.

According to the present invention, the network repository function, NRF, (or: network repository function entity - e.g. described in TS23.501) is used as the repository entity in the core network. The SEAL servers/entities can use the network repository function entity to be able to discover core network entities, and also for the core network entities to discover them in view of a flexible discovery process and in view of taking into consideration at least one further decision parameter, e.g. the energy efficiency; i.e. the decision is based on energy efficiency and/or the percentage of green energy used. Thus, the SEAL servers can use the network repository function entity to discover other SEAL servers based on (e.g.) energy efficiency and percentage of green energy used.

Furthermore, based on operator deployment, application enabler entities considered to be trusted by the operator can be allowed to be discovered and interact directly with relevant NFs or between application enabler entities. The NRF functionality (i.e. the network repository function entity) can be available on PLMN level where the network repository function entity is configured with information for the whole PLMN including available application enabler entities in its domain, their energy consumption and percentage of green energy used for powering them. It is advantageous to expand this NRF functionality to be able to support service application enabler entity discovery also on application enabler level together with the NF discovery. There are application enabler servers/ SEAL servers being part of the PLMN domain, but they are not registered/discoverable via NRF.
Especially according to the present invention, the slicing concept can be expanded on application enabler level where specific application enabler/SEAL servers can be dedicated to specific network slice which is discoverable via NRF, again based (e.g.) on energy efficiency/consumption and percentage of green energy.

It is advantageous to have more flexible possibilities to use different services within the operator domain (of the telecommunications network) possible to be discovered via secure means (e.g., APIs). It is furthermore advantageous to be able to have an increased security and/or possibilities to discover available services within the operator domain having in mind additional decision parameters such as the energy consumption and green energy.

Hence, according to the present invention, it is advantageously possible to expand the functionality of network repository function NRF (that is existing in conventionally known telecommunications networks) to include also the discovery of application enabler entities within the PLMN domain together with (e.g.) information about energy efficiency and green energy mix. Defining an application enabler entity profile, will help the network repository function entity to have all of its available operations to be applicable for application enabler entities, deployed within the public land mobile network domain.

According to the present invention, after the first step (i.e. the requesting application enabler entity or a requesting network entity transmitting the discovery request information to the network repository function entity), the network repository function entity provides - in the second step and to the requesting application enabler entity or requesting network entity - the profile information of or regarding at least one application enabler entity or of or regarding at least one network entity.
In case that the profile information of or regarding only one application enabler entity or of or regarding only one network entity is provided in the second step, there is either only one such application enabler entity or network entity available, or the decision which one of the plurality of (possible and/or available) application enabler entities or network entities has already been taken by the network repository function entity (and, thus, only one profile information provided).

According to the present invention, this is possible in case that the (profile) information, within the network repository function entity - especially regarding additional decision parameters such as, e.g., the energy consumption and green energy -, is up to date. One realization thereof might comprise that every SEAL server (i.e. the plurality of application enabler entities or plurality of network entities) registers to the network repository function entity pointing out its capabilities, and for the SEAL servers/nodes that are aware of energy related information, it is expected that the energy information function entity gathers their energy consumption and carbon intensity ratio. Then the network repository function entity is able to subscribe to the energy information function entity to receive periodically the available per node consumption and carbon intensity ratio of its registered SEAL servers. This means, that the network repository function entity - in the second step -directly provides the most energy effective result (an information regarding a single node, not a plurality thereof), i.e. the decision to select the application enabler entity or network entity (or SEAL server) is taken by the network repository function entity. However, the network repository function entity might also provide - in the second step - the profile information of or regarding a plurality of application enabler entities or of or regarding a plurality of network entities, in which case the decision which one of the plurality of (possible and/or available) application enabler entities or network entities to select is taken by the requesting application enabler entitity or requesting network entity.

According to the present invention, it is advantageously possible and preferred that the profile information of or regarding the plurality of application enabler entities or plurality of network entities comprises a piece of profile information regarding each one, or regarding at least part, of the plurality of application enabler entities or network entities,
wherein especially the profile information, or at least a part of the pieces of profile information respectively, comprises an information regarding a decision parameter, especially an energy-related information of or regarding at least part of the plurality of application enabler entities or network entities.

It is thereby advantageously possible to realize and implement the inventive method in a comparatively simple and efficient manner, namely by means of providing the possibility to not only dynamically and flexibly chose (or decide) which one of potentially different (i.e. a plurality of) application enabler entities or network entities (or instances thereof, being able to provide a specific service) to use but also to do so taking into consideration at least one decision parameter, especially an energy-related information.

Furthermore, it is advantageously possible and preferred according to the present invention that the telecommunications network comprises, or is associated with, an energy information function entity for providing energy-related information or pieces of energy-related information of or regarding the plurality of application enabler entities or network entities or part thereof (or that the telecommunications network comprises an information-providing function entity regarding another decision parameter for providing information or pieces of information (regarding the decision parameter) of or regarding the plurality of application enabler entities or network entities or part thereof),
wherein, in a third step subsequent to the second step, the requesting application enabler entity or the requesting network entity transmits an energy-related request information to the energy information function entity (or a request information to the information-providing function entity regarding another decision parameter), and wherein, in a fourth step subsequent to the third step, the energy information function entity (or the information-providing function entity) provides, to the requesting application enabler entity or requesting network entity, an energy-related information or pieces of energy-related information (or an information regarding another decision parameter) of or regarding the plurality of application enabler entities or network entities.

It is thereby advantageously possible, according to the present invention, to realize and implement the inventive method in a comparatively simple and efficient manner, namely by means of being able to provide - to the requesting application enabler entity or the requesting network entity, and in view of deciding which one of the plurality of application enabler entities or network entities to use - current, or updated, information regarding the decision parameter, especially regarding energy consumption and/or energy efficiency.

Furthermore, it is advantageously possible and preferred according to the present invention that, in order for providing communication services in a dynamic and/or flexible manner and for supporting and providing an energy-related selection of an application enabler entity or a network entity, the requesting application enabler entities or requesting network entity selects one of the plurality of application enabler entities or network entities, and initiates communication with the selected application enabler entity or network entity, wherein the selection is based on the energy-related information or pieces of energy-related information (or based on the information regarding the other decision parameter) of or regarding the plurality of application enabler entities or network entities.

It is thereby advantageously possible, according to the present invention, to realize and implement the inventive method in a comparatively simple and efficient manner.

Furthermore, it is advantageously possible and preferred according to the present invention that the telecommunications network comprises, or provides, a plurality of network slices, wherein the profile information that the network repository function entity provides to the requesting application enabler entity or requesting network entity comprises an indication which application enabler entity, or which network entity, - of the plurality of application enabler entities or network entities - corresponds to, or is usable with, which network slice.

It is thereby advantageously possible, according to the present invention, to realize and implement the inventive method in a comparatively simple and efficient manner.

Furthermore, it is advantageously possible and preferred according to the present invention that the profile information of or regarding the plurality of application enabler entities or network entities comprises, especially each piece of profile information regarding an application enabler entity or network entity, comprises at least one out of the following:
-- an application enabler entity or network entity identifier information, especially being a unique identifier that represents the application enabler entity or network entity,
-- an application enabler entity or network entity type information, especially defining the type of the service,
-- a PLMN identifier information or a PLMN identifier and network identifier information or fully qualified domain name or internet protocol address of the application enabler entity or network entity,
-- a capacity indication or information of the application enabler entity or network entity,
-- a location information or serving scope information of the application enabler entity or network entity,
-- a network slice information of the application enabler entity or network entity,
-- an address information on the energy information function entity,
-- an energy-related information or a piece of energy-related information, wherein especially energy-related information comprises energy consumption information and/or renewable energy information.

Furthermore, it is advantageously possible and preferred according to the present invention that the energy-related information or a piece of energy-related information comprises energy consumption information as the average, or current, energy requirement per time unit, especially kWh per day or kWh per hour, and/or renewable energy information as the average, or current, ratio of renewable to carbon intensive energy.

Furthermore, the present invention relates to a user equipment for being used with an application enabler layer and/or a service enabler architecture layer for verticals, SEAL, for being provided with communication services in a dynamic and/or flexible manner, using an application enablement layer and/or a vertical application layer of or via a telecommunications network, especially for supporting and providing an energy-related selection of an application enabler entity or a network entity of or associated to the telecommunications network or of or associated to a third party, wherein the telecommunications network comprises, or is associated with, a network repository function entity for providing profile information of or regarding a plurality of application enabler entities or of or regarding a plurality of network entities, in a discovery process of such application enabler entities or network entities, wherein, in order for providing communication services in a dynamic and/or flexible manner, the user equipment is configured such that:
-- a requesting application enabler entity or a requesting network entity transmits a discovery request information to the network repository function of the telecommunications network,
-- the network repository function entity provides, to the requesting application enabler entity or requesting network entity, a profile information of or regarding at least one application enabler entity or of or regarding at least one network entity.

Furthermore, the present invention relates to a system or to a telecommunications network for using an application enabler layer and/or a service enabler architecture layer for verticals, SEAL, for providing communication services to a user equipment in a dynamic and/or flexible manner, using an application enablement layer and/or a vertical application layer of or via a telecommunications network, especially for supporting and providing an energy-related selection of an application enabler entity or a network entity of or associated to the telecommunications network or of or associated to a third party,
wherein the telecommunications network comprises, or is associated with, a network repository function entity for providing profile information of or regarding a plurality of application enabler entities or of or regarding a plurality of network entities, in a discovery process of such application enabler entities or network entities,
wherein, in order for providing communication services in a dynamic and/or flexible manner, the system or telecommunications network is configured such that:
-- a requesting application enabler entity or a requesting network entity transmits a discovery request information to the network repository function entity of the telecommunications network,
-- the network repository function entity provides, to the requesting application enabler entity or requesting network entity, a profile information of or regarding at least one application enabler entity or of or regarding at least one network entity.

Additionally, the present invention relates to an energy information function entity provided for being used in a system or in a telecommunications network according to the present invention.

Additionally, the present invention relates to a program comprising a computer readable program code which, when executed on a computer and/or on a user equipment and/or on a network node of a telecommunications network, especially an application enabler entity or network entity and/or in part on a network node of a telecommunications network, especially an application enabler entity or network entity, causes the computer and/or the user equipment and/or the network node of a telecommunications network, especially an application enabler entity or network entity to perform the inventive method.

Additionally, the present invention relates to a computer-readable medium comprising instructions which when executed on a computer and/or on a user equipment and/or on a network node of a telecommunications network, especially an application enabler entity or network entity and/or in part on a network node of a telecommunications network, especially an application enabler entity or network entity, causes the computer and/or the user equipment and/or the network node of a telecommunications network, especially an application enabler entity or network entity to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

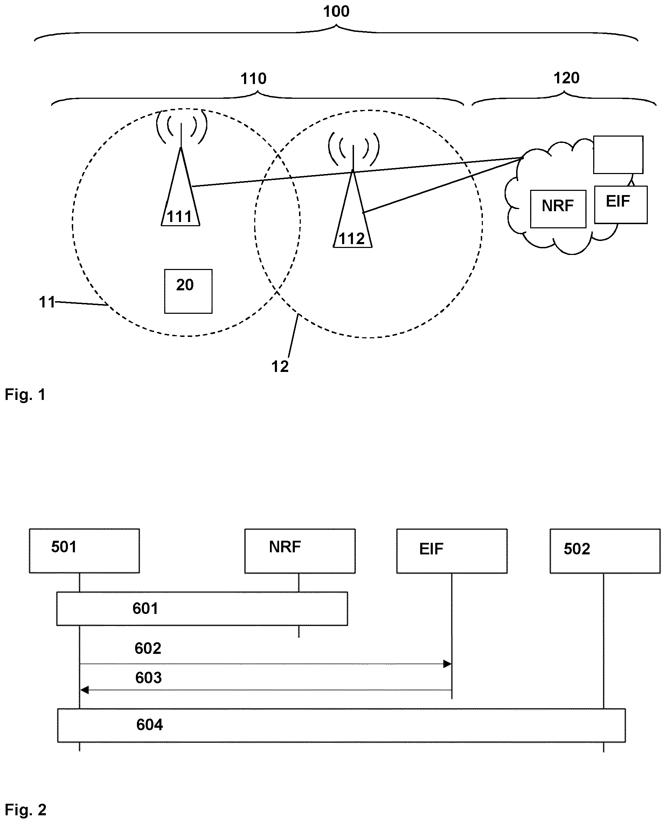

Figure 1 schematically illustrates a telecommunications network, comprising an access network and a core network, and a user equipment, wherein an application enabler layer and/or a service enabler architecture layer for verticals, SEAL, is used for providing communication services to the user equipment in a dynamic and/or flexible manner, using an application enablement layer and/or a vertical application layer of or via the telecommunications network, wherein the telecommunications network comprises a network repository function entity, NRF, for providing profile information of or regarding a plurality of application enabler entities or of or regarding a plurality of network entities, in a discovery process of such application enabler entities or network entities.
Figure 2 schematically illustrates a communication diagram between a requesting application enabler entity or a requesting network entity, a network repository function entity, an energy information function entity, and an application enabler entity or network entity being one of a plurality of application enabler entities or network entities.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising an access network 110 and a core network 120, and a user equipment 20 is schematically shown. An application enabler layer and/or a service enabler architecture layer for verticals, SEAL, is used for providing communication services to the user equipment 20 (or, for a plurality thereof wherein only the one user equipment 20 is schematically shown, in Figure 1, for the sake of simplicity) in a dynamic and/or flexible manner, using an application enablement layer and/or a vertical application layer of, or via, the telecommunications network 100, wherein the telecommunications network 100 comprises a network repository function entity NRF for providing profile information of or regarding a plurality of application enabler entities or of or regarding a plurality of network entities, in a discovery process of such application enabler entities or network entities. According to a preferred embodiment of the present invention (and as represented in Figure 1), the telecommunications network 100 - especially its core network 120 - also comprises an energy information function EIF by means of which it is possible to provide energy-related information or pieces of energy-related information of or regarding application enabler entities or network entities.

Typically in such scenarios, the user equipment 20 uses services provided by a vertical application layer, VAL, by SEAL/Vertical application enablers, service provider domain or vertical application layer server being typically (but not necessarily) external to the telecommunications network 100.

The telecommunications network 100 is especially realized as mobile (cellular) communication network 100. The telecommunications network 100, especially its core network 120, typically comprises a number of further network functions or services (or application enabler entities or network entities) that are, however and for the sake of simplicity, not explicitly and separately indicated, in Figure 1, by means of reference signs. The access network 110 of the telecommunications network 100 exemplarily comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 (if connected to or with the telecommunications network 100) is connected, via a radio interface or air interface, to the first base station entity 111 of the access network 110 of the telecommunications network 100.

Typically, in such a scenario, the user equipment 20 is a vertical application layer user equipment 20, especially comprising a vertical application layer client (VAL client) and/or SEAL client/Vertical application enabler client - not explicitly and separately shown in Figure 1 by means of a reference sign.
Furthermore, the user equipment 20 is typically, but not necessarily, mobile - i.e. able to move - with respect to the - typically, but not necessarily, static - radio cells 11, 12 or corresponding base station entities 111, 112 of the access network 110.
Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

Figure 2 schematically illustrates a communication diagram of an exemplary communication between a requesting application enabler entity or a requesting network entity 501, a network repository function entity NRF, an energy information function entity EIF, and an application enabler entity or network entity 502 being one of a plurality of application enabler entities or network entities.

According to the present invention, the network repository function entity NRF is, typically, a repository entity - typically in the core network 120, e.g. in a manner as described in TS23.501 -, and the SEAL servers/entities (i.e. application enabler entities or service enablement application layer entities) are able to use the network repository function entity NRF to be able to discover core network entities (i.e. (other) application enabler entities or (other) network entities). Especially, according to the present invention, this discovery process is also able to be performed for the core network entities (i.e. any application enabler entities or any network entities) to discover them based on (or in view of) at least one decision parameter (especially regarding the decision which one (or which instance) of the different application enabler entities or network entities (having a certain (common) set of functionalities or services, i.e. being, roughly, of the same kind of application enabler entity/network entity) shall be used for providing a certain kind of (requested) service), especially the energy efficiency and/or percentage of green energy used (as the decision parameter). Hence, according to the present invention, the SEAL servers (i.e. the requesting application enabler entity or the requesting network entity 501) cannot only dynamically and flexibly be informed about available other SEAL servers (and the profile thereof that are able to perform the requested kind of service) but also the SEAL servers (i.e. the requesting application enabler entity or the requesting network entity 501) can use the network repository function entity NRF to discover other SEAL servers (application enabler entities or network entities 502) - and take a decision which one to actually request services from - based on decision parameter information, e.g., energy efficiency and percentage of green energy used.

In a first processing step 601, the requesting application enabler entity or the requesting network entity 501 performs application enabler entity discovery with the network repository function entity NRF, i.e. the considered application enabler entity service consumer (SEAL server or VAL server - the requesting application enabler entity or the requesting network entity 501) would like to find a specific application enabler entity/server (i.e. (other) application application enabler entities or (other) network entities 502) and performs discovery process with network repository function entity NRF. As result of this discovery process, the application enabler entity service consumer (i.e. the requesting application enabler entity or the requesting network entity 501) receives the needed application enabler entity, contact information (i.e. the profile information of the application enabler entity - or application enabler entity profile - of all servers available (of the (other) application functions or (other) network entities 502) based on the specific discovery criteria from the application enabler entity service consumer, i.e. the requesting application enabler entity or the requesting network entity 501). Some of the application enabler entities (i.e. of the (other) application enabler entities or (other) network entities 502) can provide specific energy information for energy consumption, renewable energy (received at the time of the registration of the application enabler entity/SEAL server (i.e. of the (other) application enabler entities or (other) network entities 502) to the network repository function entity NRF) while others do not have this information (or other decision parameters). Especially, the network repository function entity NRF provides also address info on the energy information function entity EIF (or another server regarding other decision parameter information).

In a second processing step 602, the application enabler entity service consumer (i.e. the requesting application enabler entity or the requesting network entity 501) can receive the requested application enabler entities in the first processing step 601 without energy information or with information that is not up to date due to the fact the network repository function entity NRF has the info at the time of registration of the application enabler entities /SEAL servers ((other) application enabler entities or (other) network entities 502). Thus, the requesting application enabler entity service consumer 501 requests more details on the energy information for the respective application enabler entities from the energy information function entity EIF. E.g, the request/check comprises a request on current kWh consumption, average kWh consumption, current ratio of renewable to carbon intensive energy, etc.

In a third processing step 603, the (requesting) application enabler entity service consumer 501 receives reply with the current values on energy consumption of all application enabler entities (i.e. the (other) application enabler entities or (other) network entities 502) from the energy information function entity EIF.

In a fourth processing step 604, based on the received response (e.g. comprising the current energy consumption and energy mix) in the third processing step 603, the application enabler entity service consumer 501 decides to select the most efficient one of the other application enabler entities or network entities 502 and using green energy application enabler entity /SEAL server and initiates communication with it.

Hence, according to the present invention, based on operator deployment, application enabler entities considered to be trusted by the operator can be allowed to be discovered and interact directly with relevant NFs or between application enabler entities. The NRF-functionality can be available on PLMN level where the network repository function entity NRF is configured with information for the whole PLMN including available application enabler entities in its domain, their energy consumption and percentage of green energy used for powering them. According to the present invention, it is advantageously possible to expand this network repository function functionality to be able to support service (application enabler entity) discovery also on application enabler level together with the NF discovery, i.e. the network repository function entity preferably integrates the NF discovery of a typical network repository function with providing a discovery functionality on application enabler level, especially by means of registering application enabler servers/ SEAL servers (that are, e.g., part of the PLMN domain or, at least, trusted by the PLMN domain) and their related energy information but are not registered/discoverable via a conventionally known network repository function. Additionally according to the present invention, this (i.e. the provision, by the network repository function entity, of the discovery functionality on application enabler level, especially by means of registering application enabler servers/ SEAL servers (and their related energy information)) is possible by introducing - as the network repository function entity - a new SEAL repository entity which is used to fulfill SEAL repository management, e.g. in a separate security domain (i.e. separate (or distinct) from the security domain of a conventionally known network repository function of the telecommunications network 100).
Especially - and in addition to expand the network repository function entity (or functionality) to be able to support service (application enabler entity) discovery also on application enabler level together with the NF discovery - according to the present invention, it is provided for the profile information of (discoverable) application enabler entities (or, the profile information of (discoverable) network entities), and, thus, the requesting application enabler entity or the requesting network entity, having energy information (or energy-related information). This allows the consumer (i.e. the requesting application enabler entity or the requesting network entity) to receive a list of (possible, or available) SEAL entities (or SEAL servers) and, further, to find the most optimal one with the energy information function entity EIF.
Additionally according to the present invention (alternatively or cumulatively), the concept of network slices is able to be expanded on application enabler level where specific application enabler/SEAL servers can be dedicated to a specific network slice which is discoverable via the network repository function entity NRF, again based on, e.g., energy efficiency/consumption and percentage of green energy as an example of a decision parameter.

According to the present invention, it is advantageously possible to have more flexible possibilities to use different services within the operator domain possible to be discovered via secure means (e.g. using application programming interfaces, APIs). It is important to have increased security and possibilities to discover available services within the operator domain - especially in view of being able to use such information obtained via discovery in a manner such as to base the decision which one of the plurality of available services to chose on at least one additional decision parameter, such as having in mind the energy consumption and green energy (or energy efficiency and green energy mix). Especially according to the present invention, it is preferred to define an application enabler entity, profile that helps the network repository function entity NRF to have all of its available operations to be applicable for applications, /SEAL servers/application enabler servers, deployed within the PLMN domain. Especially according to the present invention, the application enabler entity, profile contains:
-- application enabler entity instance ID (unique identifier that represents the application enabler entity service),
-- application enabler entity type (type of the service, e.g. UAS, V2X, ...),
-- PLMN ID or PLMN ID + NID,
-- FQDN or IP address of application enabler entity,
-- application enabler entity capacity, location information or serving scope for the application enabler entity instance,
-- slice information for the application enabler entity,
-- energy consumption information and renewable energy information.

Furthermore, more specific parameters might include:
-- UAS specific parameters: application enabler entity instance ID=UAE server ID, application enabler entity type=UAS,
-- V2X specific parameters: application enabler entity instance ID=VAE server ID, application enabler entity type=VAES
-- ADAES specific parameters: application enabler entity instance ID=ADAE server ID, application enabler entity type=ADAES
-- LMS specific parameters: application enabler entity instance ID=LME server ID, application enabler entity type=LMS
-- NSCE specific parameters: application enabler entity instance ID=NSCE server ID, application enabler entity type=NSCES

Any other application enablers or SEAL servers (i.e. of other types) might follow the same or similar naming logic.

According to the present invention, every application enabler entity, is registered to the network repository function entity NRF with its application enabler entity profile. Some of the application enabler entities have the capability to provide information on their slice (S-NSSAI(s)), energy consumption (average KWH per day, average KWH per hour) and renewable energy (average ratio of renewable to carbon intensive energy). After registration, these application enabler entities, can be discovered via the network repository function entity NRF.

## Claims

1. Method for using an application enabler layer and/or a service enabler architecture layer for verticals, SEAL, for providing communication services to a user equipment (20) in a dynamic and/or flexible manner, using an application enablement layer and/or a vertical application layer of or via a telecommunications network (100), especially for supporting and providing an energy-related selection of an application enabler entity or a network entity of or associated to the telecommunications network (100) or of or associated to a third party,
wherein the telecommunications network (100) comprises, or is associated with, a network repository function entity (NRF) for providing profile information of or regarding a plurality of application enabler entities or of or regarding a plurality of network entities, in a discovery process of such application enabler entities or network entities,
wherein, in order for providing communication services in a dynamic and/or flexible manner, the method comprises the following steps:
-- in a first step, a requesting application enabler entity or a requesting network entity (501) transmits a discovery request information to the network repository function entity (NRF) of the telecommunications network (100),
-- in a second step, the network repository function entity (NRF) provides, to the requesting application enabler entity or requesting network entity (501), a profile information of or regarding at least one application enabler entity or of or regarding at least one network entity (502).

2. Method according to claim 1, wherein the provided or transmitted profile information comprises a piece of profile information of or regarding one application enabler entity or one network entity (502), or wherein the provided or transmitted profile information of or regarding the plurality of application enabler entities or plurality of network entities (502) comprises a piece of profile information regarding each one, or regarding at least part, of the plurality of applications functions or network entities (502),
wherein especially the profile information, or at least a part of the pieces of profile information respectively, comprises an energy-related information of or regarding at least part of the plurality of application enabler entities or network entities (502).

3. Method according to one of the preceding claims, wherein the telecommunications network (100) comprises, or is associated with, an energy information function entity (EIF) for providing energy-related information or pieces of energy-related information of or regarding the plurality of application enabler entities or network entities (502) or part thereof,
wherein, in a third step subsequent to the second step, the requesting application enabler entity or the requesting network entity (501) transmits an energy-related request information to the energy information function entity (EIF), and wherein, in a fourth step subsequent to the third step, the energy information function entity (EIF) provides, to the requesting application enabler entity or requesting network entity (501), an energy-related information or pieces of energy-related information of or regarding the plurality of application enabler entities or network entities (502).

4. Method according to one of the preceding claims, wherein in order for providing communication services in a dynamic and/or flexible manner and for supporting and providing an energy-related selection of an application enabler entity or a network entity, the requesting application enabler entity or requesting network entity (501) selects one of the plurality of application enabler entities or network entities (502), and initiates communication with the selected application enabler entity or network entity, wherein the selection is based on the energy-related information or pieces of energy-related information of or regarding the plurality of application enabler entities or network entities (502).

5. Method according to one of the preceding claims, wherein the telecommunications network (100) comprises, or provides, a plurality of network slices, wherein the profile information that the network repository function entity (NRF) provides to the requesting application enabler entity or requesting network entity (501) comprises an indication which application enabler entity, or which network entity, - of the plurality of application enabler entities or network entities (502) - corresponds to, or is usable with, which network slice.

6. Method according to one of the preceding claims, wherein the profile information of or regarding the at least one application enabler entity or network entity (502) or of or regarding the plurality of application enabler entities or network entities (502) comprises, especially each piece of profile information regarding an application enabler entity or network entity (502), comprises at least one out of the following:
-- an application enabler entity or network entity identifier information, especially being a unique identifier that represents the application enabler entity or network entity (502),
-- an application enabler entity or network entity type information, especially defining the type of the service,
-- a PLMN identifier information or a PLMN identifier and network identifier information or fully qualified domain name or internet protocol address of the application enabler entity or network entity (502),
-- a capacity indication or information of the application enabler entity or network entity (502),
-- a location information or serving scope information of the application enabler entity or network entity (502),
-- a network slice information of the application enabler entity or network entity (502),
-- an address information on the energy information function entity (EIF),
-- an energy-related information or a piece of energy-related information,
wherein especially energy-related information comprises energy consumption information and/or renewable energy information.

7. Method according to one of the preceding claims, wherein the energy-related information or a piece of energy-related information comprises energy consumption information as the average, or current, energy requirement per time unit, especially kWh per day or kWh per hour, and/or renewable energy information as the average, or current, ratio of renewable to carbon intensive energy.

8. User equipment (20) for being used with an application enabler layer and/or a service enabler architecture layer for verticals, SEAL, for being provided with communication services in a dynamic and/or flexible manner, using an application enablement layer and/or a vertical application layer of or via a telecommunications network (100), especially for supporting and providing an energy-related selection of an application enabler entity or a network entity of or associated to the telecommunications network (100) or of or associated to a third party,
wherein the telecommunications network (100) comprises, or is associated with, a network repository function entity (NRF) for providing profile information of or regarding a plurality of application enabler entities or of or regarding a plurality of network entities, in a discovery process of such application enabler entities or network entities,
wherein, in order for providing communication services in a dynamic and/or flexible manner, the user equipment (20) is configured such that:
-- a requesting application enabler entity or a requesting network entity (501) transmits a discovery request information to the network repository function (NRF) of the telecommunications network (100),
-- the network repository function entity (NRF) provides, to the requesting application enabler entity or requesting network entity (501), a profile information of or regarding at least one application enabler entity or of or regarding at least one network entity (502).

9. System or telecommunications network (100) for using an application enabler layer and/or a service enabler architecture layer for verticals, SEAL, for providing communication services to a user equipment (20) in a dynamic and/or flexible manner, using an application enablement layer and/or a vertical application layer of or via a telecommunications network (100), especially for supporting and providing an energy-related selection of an application enabler entity or a network entity of or associated to the telecommunications network (100) or of or associated to a third party,
wherein the telecommunications network (100) comprises, or is associated with, a network repository function entity (NRF) for providing profile information of or regarding a plurality of application enabler entities or of or regarding a plurality of network entities, in a discovery process of such application enabler entities or network entities,
wherein, in order for providing communication services in a dynamic and/or flexible manner, the system or telecommunications network (100) is configured such that:
-- a requesting application enabler entity or a requesting network entity (501) transmits a discovery request information to the network repository function entity (NRF) of the telecommunications network (100),
-- the network repository function entity (NRF) provides, to the requesting application enabler entity or requesting network entity (501), a profile information of or regarding at least one application enabler entity or of or regarding at least one network entity (502).

10. Energy information function entity (EIF) provided for being used in or as a part of or associated with a system or a telecommunications network (100) according to claim 9.

11. Program comprising a computer readable program code which, when executed on a computer and/or on a user equipment (20) and/or on a network node of a telecommunications network (100), especially an application enabler entity or network entity and/or in part on a network node of a telecommunications network (100), especially an application enabler entity or network entity, causes the computer and/or the user equipment (20) and/or the network node of a telecommunications network (100), especially an application enabler entity or network entity to perform a method according one of claims 1 to 7.

12. Computer-readable medium comprising instructions which when executed on a computer and/or on a user equipment (20) and/or on a network node of a telecommunications network (100), especially an application enabler entity or network entity and/or in part on a network node of a telecommunications network (100), especially an application enabler entity or network entity, causes the computer and/or the user equipment (20) and/or the network node of a telecommunications network (100), especially an application enabler entity or network entity to perform a method according to one of claims 1 to 7.

## Amended claims

### Amended claims in accordance with Rule 137(2) EPC.

1. Method for using an application enabler layer and/or a service enabler architecture layer for verticals, SEAL, using an application enablement layer and/or a vertical application layer of or via a telecommunications network (100), wherein the telecommunications network (100) comprises, or is associated with, a network repository function entity (NRF) for providing profile information of or regarding a plurality of application enabler entities or of or regarding a plurality of network entities, in a discovery process of such application enabler entities or network entities,
wherein, in order for providing communication services in a dynamic and/or flexible manner, the method comprises the following steps:
-- in a first step, a requesting application enabler entity or a requesting network entity (501) transmits a discovery request information to the network repository function entity (NRF) of the telecommunications network (100),
**--** in a second step, the network repository function entity (NRF) provides, to the requesting application enabler entity or requesting network entity (501), a profile information of or regarding at least one application enabler entity or of or regarding at least one network entity (502),
wherein the telecommunications network (100) comprises, or is associated with, an energy information function entity (EIF) for providing energy-related information or pieces of energy-related information of or regarding the plurality of application enabler entities or network entities (502) or part thereof,
wherein, in a third step subsequent to the second step, the requesting application enabler entity or the requesting network entity (501) transmits an energy-related request information to the energy information function entity (EIF), and wherein, in a fourth step subsequent to the third step, the energy information function entity (EIF) provides, to the requesting application enabler entity or requesting network entity (501), an energy-related information or pieces of energy-related information of or regarding the plurality of application enabler entities or network entities (502).

2. Method according to claim 1, wherein the provided or transmitted profile information comprises a piece of profile information of or regarding one application enabler entity or one network entity (502), or wherein the provided or transmitted profile information of or regarding the plurality of application enabler entities or plurality of network entities (502) comprises a piece of profile information regarding each one, or regarding at least part, of the plurality of applications functions or network entities (502),
wherein especially the profile information, or at least a part of the pieces of profile information respectively, comprises an energy-related information of or regarding at least part of the plurality of application enabler entities or network entities (502).

3. Method according to one of the preceding claims, wherein in order for providing communication services in a dynamic and/or flexible manner and for supporting and providing an energy-related selection of an application enabler entity or a network entity, the requesting application enabler entity or requesting network entity (501) selects one of the plurality of application enabler entities or network entities (502), and initiates communication with the selected application enabler entity or network entity, wherein the selection is based on the energy-related information or pieces of energy-related information of or regarding the plurality of application enabler entities or network entities (502).

4. Method according to one of the preceding claims, wherein the telecommunications network (100) comprises, or provides, a plurality of network slices, wherein the profile information that the network repository function entity (NRF) provides to the requesting application enabler entity or requesting network entity (501) comprises an indication which application enabler entity, or which network entity, - of the plurality of application enabler entities or network entities (502) - corresponds to, or is usable with, which network slice.

5. Method according to one of the preceding claims, wherein the profile information of or regarding the at least one application enabler entity or network entity (502) or of or regarding the plurality of application enabler entities or network entities (502) comprises, especially each piece of profile information regarding an application enabler entity or network entity (502), comprises at least one out of the following:
-- an application enabler entity or network entity identifier information, especially being a unique identifier that represents the application enabler entity or network entity (502),
-- an application enabler entity or network entity type information, especially defining the type of the service,
-- a PLMN identifier information or a PLMN identifier and network identifier information or fully qualified domain name or internet protocol address of the application enabler entity or network entity (502),
-- a capacity indication or information of the application enabler entity or network entity (502),
-- a location information or serving scope information of the application enabler entity or network entity (502),
-- a network slice information of the application enabler entity or network entity (502),
-- an address information on the energy information function entity (EIF),
-- an energy-related information or a piece of energy-related information,
wherein especially energy-related information comprises energy consumption information and/or renewable energy information.

6. Method according to one of the preceding claims, wherein the energy-related information or a piece of energy-related information comprises energy consumption information as the average, or current, energy requirement per time unit, especially kWh per day or kWh per hour, and/or renewable energy information as the average, or current, ratio of renewable to carbon intensive energy.

7. User equipment (20) for being used with an application enabler layer and/or a service enabler architecture layer for verticals, SEAL, using an application enablement layer and/or a vertical application layer of or via a telecommunications network (100) of which the user equipment (20) is part,
wherein the telecommunications network (100) comprises, or is associated with, a network repository function entity (NRF) for providing profile information of or regarding a plurality of application enabler entities or of or regarding a plurality of network entities, in a discovery process of such application enabler entities or network entities,
wherein the telecommunications network (100) comprises, or is associated with, an energy information function entity (EIF) for providing energy-related information or pieces of energy-related information of or regarding the plurality of application enabler entities or network entities (502) or part thereof, wherein, in order for providing communication services in a dynamic and/or flexible manner, the user equipment (20) is configured such that:
-- a requesting application enabler entity or a requesting network entity (501) transmits a discovery request information to the network repository function (NRF) of the telecommunications network (100),
**--** the network repository function entity (NRF) provides, to the requesting application enabler entity or requesting network entity (501), a profile information of or regarding at least one application enabler entity or of or regarding at least one network entity (502),
wherein the user equipment (20) is further configured such that
**--** the requesting application enabler entity or the requesting network entity (501) transmits an energy-related request information to the energy information function entity (EIF), and
-- the energy information function entity (EIF) provides, to the requesting application enabler entity or requesting network entity (501), an energy-related information or pieces of energy-related information of or regarding the plurality of application enabler entities or network entities (502).

8. System or telecommunications network (100) for using an application enabler layer and/or a service enabler architecture layer for verticals, SEAL, using an application enablement layer and/or a vertical application layer of or via a telecommunications network (100),
wherein the telecommunications network (100) comprises, or is associated with, a network repository function entity (NRF) for providing profile information of or regarding a plurality of application enabler entities or of or regarding a plurality of network entities, in a discovery process of such application enabler entities or network entities,
wherein the telecommunications network (100) comprises, or is associated with, an energy information function entity (EIF) for providing energy-related information or pieces of energy-related information of or regarding the plurality of application enabler entities or network entities (502) or part thereof, wherein, in order for providing communication services in a dynamic and/or flexible manner, the system or telecommunications network (100) is configured such that:
-- a requesting application enabler entity or a requesting network entity (501) transmits a discovery request information to the network repository function entity (NRF) of the telecommunications network (100),
-- the network repository function entity (NRF) provides, to the requesting application enabler entity or requesting network entity (501), a profile information of or regarding at least one application enabler entity or of or regarding at least one network entity (502)
wherein the telecommunications network (100) is further configured such that:
-- the requesting application enabler entity or the requesting network entity (501) transmits an energy-related request information to the energy information function entity (EIF), and
-- the energy information function entity (EIF) provides, to the requesting application enabler entity or requesting network entity (501), an energy-related information or pieces of energy-related information of or regarding the plurality of application enabler entities or network entities (502).

9. Energy information function entity (EIF) provided for being used in or as a part of or associated with a system or a telecommunications network (100) according to claim 9.

10. Program comprising a computer readable program code which, when executed on a computer and/or on a user equipment (20) and/or on a network node of a telecommunications network (100), especially an application enabler entity or network entity and/or in part on a network node of a telecommunications network (100), especially an application enabler entity or network entity, causes the computer and/or the user equipment (20) and/or the network node of a telecommunications network (100), especially an application enabler entity or network entity to perform a method according one of claims 1 to 7.

11. Computer-readable medium comprising instructions which when executed on a computer and/or on a user equipment (20) and/or on a network node of a telecommunications network (100), especially an application enabler entity or network entity and/or in part on a network node of a telecommunications network (100), especially an application enabler entity or network entity, causes the computer and/or the user equipment (20) and/or the network node of a telecommunications network (100), especially an application enabler entity or network entity to perform a method according to one of claims 1 to 7.
